# EUROPÄISCHE PATENTSCHRIFT

(11) **EP 1 027 685 B1**
(45) Veröffentlichungstag und Bekanntmachung des Hinweises auf die Patenterteilung: **27.03.2002**
(21) Anmeldenummer: 98949993.4
(22) Anmeldetag: 07.09.1998
(51) Int. Cl.: G07F 7/08

(54) **VERFAHREN ZUR ECHTHEITSPRÜFUNG EINES DATENTRÄGERS**
DATA MEDIUM AUTHENTICATION METHOD
PROCEDE DE CONTROLE D'AUTHENTIFICATION D'UN SUPPORT D'INFORMATIONS

(30) Priorität: 09.09.1997 DE 19739448
(43) Veröffentlichungstag der Anmeldung: 16.08.2000
(73) Patentinhaber: Giesecke & Devrient GmbH, 81677 München (DE)
(72) Erfinder: LAMLA, Michael, D-80935 München (DE); DREXLER, Hermann, D-81371 München (DE); RANKL, Wolfgang, D-94258 Frauenau (DE); WEIKMANN, Franz, D-81675 München (DE); EFFING, Wolfgang, D-82205 Gilching (DE)
(74) Vertreter: Klunker . Schmitt-Nilson . Hirsch
(86) Internationale Anmeldenummer: EP9805669
(87) Internationale Veröffentlichungsnummer: WO9913436

(56) Entgegenhaltungen:
- DE-A- 4 419 805
- GB-A- 2 298 613
- US-A- 4 985 921

## Beschreibung

Die Erfindung betrifft Verfahren zur Prüfung der Echtheit eines Datenträgers. Ferner betrifft die Erfindung den bei diesem Verfahren eingesetzten Datenträger sowie ein System, bestehend aus dem Datenträger und einer externen Einrichtung.

Um ein unautorisiertes Herstellen und Vervielfältigen von Datenträgern bzw. den Einsatz derartiger Datenträger zu verhindern, ist es erforderlich, die Echtheit eines Datenträgers mit einem hohen Maß an Zuverlässigkeit prüfen zu können. Ebenso ist es in vielen Fällen auch erforderlich, die Echtheit einer externen Einrichtung, mit der der Datenträger kommuniziert, prüfen zu können.

Ein Verfahren zur Echtheitsprüfung eines Datenträgers ist aus der DE 44 19 805 A1 bekannt. Bei dem bekannten Verfahren weist der verwendete Datenträger wenigstens einen integrierten Schaltkreis mit Speichereinheiten und Logikeinheiten sowie eine Datenleitung zum Datenaustausch mit einer externen Einrichtung auf. Der integrierte Schaltkreis verfügt zusätzlich über eine separate fest verdrahtete Schaltung zum Senden und/oder Empfangen von Daten während der Einschaltsequenz. Diese separate Schaltung wird zur Echtheitsprüfung verwendet, wobei das erste Senden bzw. Empfangen der Daten innerhalb eines definierten Zeitbereichs der Einschaltsequenz abgeschlossen ist, in der für die Datenleitung von der ISO-Norm 7816 kein definierter Zustand vorgegeben wird. Die Übertragung der für die Echtheitsprüfung relevanten Daten zwischen dem Datenträger und der externen Einrichtung erfolgt entweder über eine Datenleitung, über die auch der übrige Datenaustausch zwischen dem Datenträger und der externen Einrichtung erfolgt oder über andere Leitungen, die nicht dieser Standard-Datenleitung entsprechen und derzeit noch für zukünftige Anwendungen reserviert sind.

Die Aufgabe der Erfindung besteht darin, ein Verfahren zur Echtheitsprüfung eines Datenträgers und/oder einer externen Einrichtung anzugeben, das flexibel einsetzbar ist und gleichzeitig einem möglichst hohen Sicherheitsstandard bietet.

Diese Aufgabe wird durch die in den unabhängigen Ansprüchen angegebenen Merkmale gelöst.

Der Grundgedanke der Erfindung besteht darin, den Datenträger und die externe Einrichtung jeweils mit einer speziellen Zusatzvorrichtung für die Erzeugung und/oder Prüfung von Echtheitsdaten auszustatten und die für die Echtheitsprüfung erforderliche Datenübertragung zwischen dem Datenträger und der externen Einrichtung wenigstens teilweise über einen speziellen Übertragungskanal abzuwickeln, wobei die Zusatzvorrichtung für die Erzeugung und/oder Prüfung der Echtheitsdaten und ggf. auch der Übertragungskanal jeweils spezielle Anforderungen an den Datenträger bzw. an die externe Einrichtung stellen, die von herkömmlichen Standardausführungen nicht erfüllt werden können.

Die Erfindung hat den Vorteil, dass sie eine sehr zuverlässige Echtheitsprüfung zulässt ohne den Standard-Übertragungskanal zwischen dem Datenträger und der externen Einrichtung zu benutzen bzw. auf den Standard-Übertragungskanal angewiesen zu sein.

Weiterhin bietet die Erfindung einen sehr guten Schutz vor einem unzulässigen Nachbau des Datenträgers oder der externen Einrichtung, da die erfindungsgemäße Zusatzvorrichtung zur Erzeugung und/oder Prüfung von Echtheitsdaten und der erfindungsgemäße zusätzliche Übertragungskanal für die Echtheitsprüfung bei herkömmlichen Datenträgern und externen Einrichtungen nicht vorhanden sind und somit die Beschaffung der benötigten Bausteine für nichtautorisierte Personen erschwert wird. Diese Hürde gegen einen unzulässigen Nachbau kann noch erhöht werden, wenn die Zusatzvorrichtung zur Erzeugung und/oder Prüfung von Echtheitsdaten und der Übertragungskanal für die Echtheitsprüfung beim Datenträger bzw. bei der externen Einrichtung eine Technologie voraussetzen, die für eine nichtautorisierte Person nur schwer oder gar nicht beschaffbar ist. Vorzugsweise ist diese Technologie wenigstens zum Teil auf einem anderen technischen Gebiet angesiedelt als die für die Herstellung herkömmlicher Datenträger benötigten Technologien.

Im Rahmen der Echtheitsprüfung des Datenträgers erzeugt die Zusatzvorrichtung des Datenträgers die Echtheitsdaten und übermittelt diese über den dafür vorgesehenen Übertragungskanal an die externe Einrichtung. Die externe Einrichtung prüft die übermittelten Echtheitsdaten und entscheidet über die Echtheit des Datenträgers. Diese Entscheidung kann zusätzlich davon abhängig gemacht werden, ob zwischen der Zusatzvorrichtung des Datenträgers und einem im Datenträger angeordneten Mikrocontroller eine Verbindung besteht.

Je nach Sicherheitsanforderungen und speziellen Gegebenheiten der Anwendung wird bei der für die Echtheitsprüfung erforderlichen Datenübertragung auf wenigstens einen Übertragungskanal zurückgegriffen, der entweder logisch oder physikalisch vom Standard-Übertragungskanal getrennt ist.

Eine logische Trennung lässt sich beispielsweise dadurch erreichen, dass für die Übertragung der Echtheitsdaten dieselbe Leitung bzw. Übertragungsstrecke verwendet wird wie für die Übertragung der sonstigen Daten, wobei die Echtheitsdaten auf dieser Leitung bzw. Übertragungsstrecke jedoch so codiert sind, dass sie von den sonstigen Daten getrennt werden können und auch die Übertragung der sonstigen Daten nicht beeinträchtigen. Für die Codierung der Echtheitsdaten können gemäß der ISO-Norm zugelassene Toleranzen in dem Spannungspegel oder in der zeitlichen Lokalisierung des Übergangs zwischen unterschiedlichen logischen Pegeln der Signale des Standard-Übertragungskanals genutzt werden. Da durch diese Art der Codierung die von der ISO-Norm vorgeschriebenen Toleranzen für die Spannungspegel oder für das Übergangsverhalten der Signale nicht überschritten werden, ist diese Art der Datenübertragung ISO-kompatibel. Für Anwendungen außerhalb der ISO-Norm können die genannten Toleranzbereiche überschritten werden. Ein Vorteil der geschilderten Datenübertragung besteht zudem darin, dass auf bestehende Leitungen zurückgegriffen werden kann und somit keine zusätzlichen Leitungen oder andere Übertragungsstrecken installiert werden müssen. Anstelle der Leitung des Standard-Übertragungskanals kann auch auf andere Leitungen zurückgegriffen werden, beispielsweise auf die Leitung für die Versorgungsspannung oder auf die Leitung für das Taktsignal oder auch auf eine kontaktlose Übertragungsstrecke. Wichtig ist lediglich, dass die verwendete Leitung bzw. Übertragungsstrecke die Herstellung einer Verbindung zwischen dem Datenträger und der externen Einrichtung zum Zwecke der Übertragung von Echtheitsdaten ermöglicht.

Eine physikalische Trennung des Übertragungskanals für die Übertragung der Echtheitsdaten vom Standard-Übertragungskanal hat demgegenüber den Vorteil, dass nahezu unbegrenzte Variationsmöglichkeiten für die Realisierung des Verfahrens zur Echtheitsprüfung eröffnet werden. Dadurch können der technische Aufwand und damit auch die Kosten auf der einen Seite und der gewünschte Sicherheitsstandard auf der anderen Seite optimal an die jeweilige Anwendung angepaßt werden. Da die Kompatibilität mit einer vorhandenen Leitung oder Übertragungsstrecke nicht berücksichtigt werden muss, kann beispielsweise eine hoch komplexe und nicht allgemein verfügbare Zusatzvorrichtung beliebiger Bauart für die Erzeugung der zu übertragenden Daten eingesetzt werden, die den Datenträger bzw. die externe Einrichtung als echt ausweist und somit eine Nachahmung dieser Komponenten praktisch unmöglich macht. Beispielsweise können in diesem Zusammenhang auch die verschiedensten Techniken der kontaktlosen Übertragung eingesetzt werden.

Weitere vorteilhafte Ausgestaltungen und Weiterbildungen sind nachfolgend beschrieben und in den Zeichnungen dargestellt.

Es zeigen:
- Fig. 1: ein Blockschaltbild zur Veranschaulichung des Grundprinzips der Erfindung,
- Fig. 2: eine Variante zum Blockschaltbild aus Fig. 1,
- Fig. 3a u. 3b: Blockschaltbilder von Ausführungsformen des erfindungsgemäßen Systems, bei dem die Echtheitsdaten über die Standard-Datenleitung übertragen werden,
- Fig. 4a u. 4b: zeitliche Signalverläufe auf der Standard-Datenleitung für den Fall, dass die Übertragung der Echtheitsdaten jeweils innerhalb von Übergangszonen, die im Bereich der Signalflanken der Standarddaten definiert sind, übertragen werden,
- Fig. 5a u. 5b: zeitliche Signalverläufe auf der Standard-Datenleitung für den Fall, dass die Echtheitsdaten dem Signal für die Standarddaten als kleine Spannungschwankungen aufgeprägt werden und
- Fig. 6: ein Blockschaltbild einer Ausführungsform des erfindungsgemäßen Systems, bei dem die für die Echtheitsprüfung benötigten Daten kontaktlos zwischen der externen Einrichtung und dem Datenträger übertragen werden.

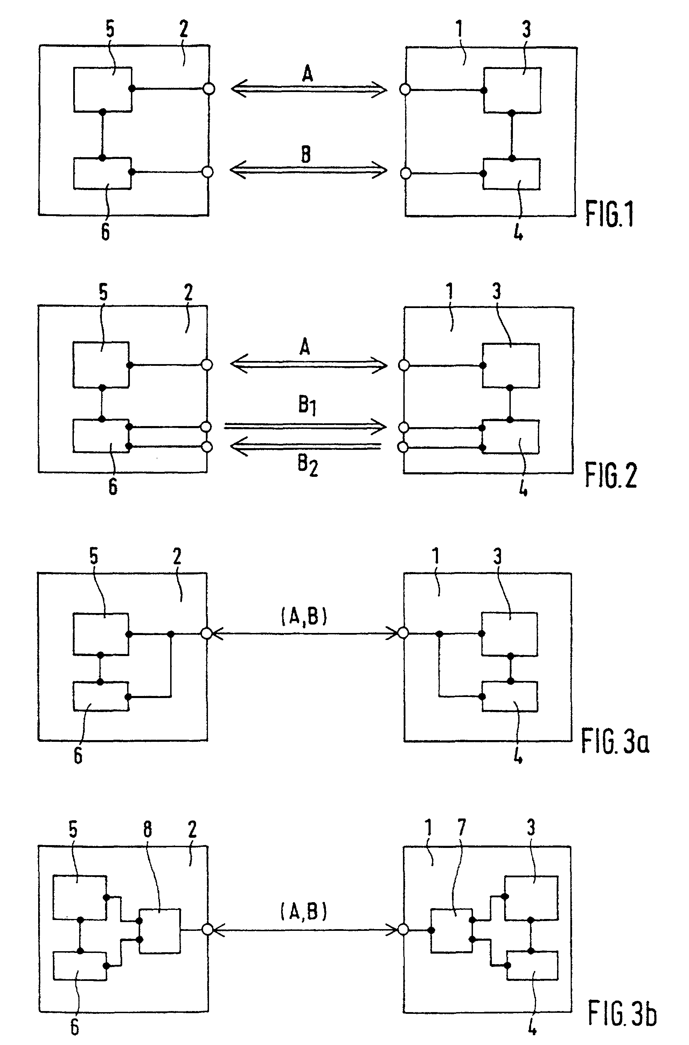

Fig. 1 zeigt ein Blockschaltbild zur Veranschaulichung des Grundprinzips der Erfindung. Eine Chipkarte 1 weist einen Mikrocontroller 3 und eine Zusatzvorrichtung 4 für die Erzeugung und Prüfung von Echtheitsdaten auf. Der Mikrocontroller 3 der Chipkarte 1 ist über einen ersten Übertragungskanal A, der in der Regel der Standard-Datenleitung entspricht mit einem Mikrocontroller 5 einer externen Einrichtung 2 verbunden. Der Übertragungskanal A und auch weitere Übertragungskanäle werden jeweils durch einen Doppelpfeil dargestellt, der die Richtung der Datenübertragung angibt. Über den Übertragungskanal A werden in bekannter Weise Transaktionen zwischen der Chipkarte 1 und der externen Einrichtung 2, die beispielsweise ein POS-Terminal oder auch ein Geldausgabeautomat usw. sein kann, abgewikkelt. Die Datenübertragung über den Übertragungskanal A erfolgt dabei gemäß einem von der ISO-Norm 7816 festgelegten Übertragungsprotokoll. Bei bekannten Systemen wird über den Übertragungskanal A auch die komplette Echtheitsprüfung der Chipkarte 1 bzw. der externen Einrichtung 2 - sofern für die jeweilige Anwendung erforderlich - abgewickelt. Diese Echtheitsprüfung kann beispielsweise in Form eines wechselseitigen Authentisierungsverfahrens nach dem Challenge und Response-Prinzip durchgeführt werden.

Erfindungsgemäß ist zusätzlich zu dem Übertragungskanal A noch ein weiterer Übertragungskanal B vorhanden, der die Zusatzvorrichtung 4 der Chipkarte 1 mit einer Zusatzvorrichtung 6 der externen Einrichtung 2 verbindet. Weiterhin sind der Mikrocontroller 3 bzw. 5 und die Zusatzvorrichtung 4 bzw. 6 jeweils miteinander verbunden. Über den Übertragungskanal B werden die für die Echtheitsprüfung von der Chipkarte 1 bzw. von der externen Einrichtung 2 benötigten Daten übertragen, die zuvor von der Zusatzvorrichtung 4 bzw. 6 erzeugt wurden. Die von der jeweils anderen Zusatzvorrichtung 6 bzw. 4 empfangenen Echtheitsdaten werden ausgewertet und es wird entschieden, ob die Chipkarte 1 bzw. die externe Einrichtung echt ist. Die Zusatzvorrichtung 4 der Chipkarte 1 kann Bestandteil des Bausteins sein, der den Mikrocontroller 3 trägt. Die Zusatzvorrichtung 6 der externen Einrichtung 2 wird in der Regel als separater Baustein realisiert sein, der als secure application module, abgekürzt SAM, bezeichnet wird und in Form einer Chipkarte ausgeführt ist.

Das Verfahren zur Echtheitsprüfung der Chipkarte 1 durch die externe Einrichtung 2 kann folgendermaßen ablaufen:

Die externe Einrichtung 2 übermittelt der Chipkarte 1 über den Übertragungskanal B Eingangsdaten, beispielsweise eine Zufallszahl. Die Zusatzvorrichtung 4 der Chipkarte 1 erzeugt mit Hilfe der Eingangsdaten Echtheitsdaten und übermittelt die Echtheitsdaten über den Übertragungskanal B an die externe Einrichtung 2. Die externe Einrichtung 2 empfängt die Echtheitsdaten und entscheidet mittels der Zusatzvorrichung 6 anhand der empfangenen Echtheitsdaten über die Echtheit der Chipkarte 1.

Das beschriebene Verfahren kann insofern abgewandelt werden, als die Erzeugung der Echtheitsdaten durch die Zusatzvorrichtung 4 der Chipkarte 1 auch ohne Eingangsdaten von der externen Einrichtung 2 erfolgen kann oder dass mit der Erzeugung der Echtheitsdaten bereits vor der vollständigen Übermittlung der Eingangsdaten begonnen werden kann. Weitere Abwandlungen können darin bestehen, dass die Eingangsdaten oder die Echtheitsdaten über den Übertragungskanal A übertragen werden. Für die Erzeugung der Echtheitsdaten kann eine Vielzahl unterschiedlicher Verfahren eingesetzt werden. Beispielsweise können die Echtheitsdaten aus den Eingangsdaten berechnet werden oder die Echtheitsdaten können durch Ausnutzen spezieller physikalischer Effekte, ggf. abhängig von Materialeigenschaften der Zusatzvorrichtung erzeugt werden. Wichtig bei allen Verfahren zur Erzeugung der Echtheitsdaten ist, dass diese sich nicht mit Vorrichtungen, die die äußeren Abmessungen einer Chipkarte 1 aufweisen, durch unberechtigte Dritte simulieren lassen. Eine derartige Simulation könnte bei einer Berechnung der Echtheitsdaten die Implementierung des von der Zusatzvorrichtung 4 abgearbeiteten Algorithmus auf einem leistungsfähigen Computer darstellen. Um dies zu verhindern, ist die Zusatzvorrichtung 4 so auszulegen, dass ihre Rechenleistung weit über dem liegt, was mit verfügbaren Mikrocontrollern erreichbar ist.

In der in Fig. 1 dargestellten Variante der Erfindung lassen sowohl der Übertragungskanal A als auch der Übertragungskanal B jeweils einen bidirektionalen Datenaustausch zu, d.h. einen Datenaustausch von der Chipkarte 1 zur externen Einrichtung 2 und einen Datenaustausch von der externen Einrichtung 2 zur Chipkarte 1. Die Trennung zwischen dem Übertragungskanal A und dem Übertragungskanal B kann entweder physikalischer Art sein oder logischer Art. Bei einer physikalischen Trennung der Übertragungskanäle wird für den Übertragungskanal B ein eigener Übertragungsweg gewählt, der vom Übertragungskanal A völlig unabhängig ist. So kann beispielsweise eine zusätzliche Leitung zwischen der Chipkarte 1 und der externen Einrichtung 2 gezogen werden oder es kann eine kontaktlose Übertragung zwischen der Chipkarte 1 und der externen Einrichtung 2 stattfinden, die von der Standarddatenübertragung über Übertragungskanal A unabhängig ist. Bei einer logischen Trennung der Übertragungskanäle A und B handelt es sich bei den Übertragungskanälen A und B um physikalisch ein und denselben Übertragungskanal, d.h. um ein und dieselbe Leitung oder ein und dieselbe kontaktlose Übertragungsstrecke. Es werden jedoch unterschiedliche Signale für die Datenübertragung verwendet, die von der Chipkarte 1 bzw. vom Terminal 2 voneinander getrennt werden können.

Fig. 2 zeigt ein Blockschaltbild einer im Vergleich zur Fig. 1 etwas abgewandelten Form der Erfindung. Die Chipkarte 1 und die externe Einrichtung sind wiederum über eine bidirektionale Leitung A, die dem Standarddatenaustausch dient, miteinander verbunden. Diese Leitung stell eine Realisierung des Übertragungskanals A für den Fall dar, dass es sich bei der Chipkarte 1 um eine kontaktbehaftete Chipkarte handelt. Soll stattdessen eine kontaktlose Chipkarte 1 zum Einsatz kommen, so wird der Übertragungskanal 1 nicht in Form einer Leitung realisiert, sondern durch eine kontaktlose Übertragungsstrecke, über die die Daten beispielsweise als elektromagnetische, als elektrostatische, als magnetische, als akustische oder als optische Signale übertragen werden. Diese unterschiedliche Auslegung des Übertragungskanals A ist auch bei der in Fig. 1 dargestellten Form der Erfindung anwendbar. Im Gegensatz zu Fig. 1 werden die für die Echtheitsprüfung benötigten Daten gemäß Fig. 2 über zwei getrennte Übertragungskanäle B₁ und B₂ übermittelt. Der Übertragungskanal B₁ dient der Datenübertragung von der externen Einrichtung 2 zur Chipkarte 1 und der Übertragungskanal B₂ dient der Datenübertragung in umgekehrter Richtung. Die Übertragungskanäle B₁ und B₂ können entweder logisch oder physikalisch voneinander und vom Übertragungskanal A getrennt sein.

Bei einer Ausgestaltung der Erfindung kann einer der Übertragungskanäle B₁ oder B₂ mit dem Übertragungskanal A identisch sein, d. h. die Echtheitsdaten bzw. im Rahmen der Echtheitsprüfung benötigte Daten können teilweise über den Übertragungskanal A übertragen werden. Im Übrigen ist es bei allen Ausführungsformen der Erfindung prinzipiell möglich, den Übertragungskanal A in das Verfahren zur Echtheitsprüfung einzubinden, d.h. einen Teil der im Rahmen dieses Verfahrens übertragenen Daten über den Übertragungskanal A zu übermitteln.

Die in Fig. 2 dargestellte Aufteilung des Übertragungskanals für die bei der Echtheitsprüfung benötigten Daten in die Übertragungskanäle B₁ und B₂ kann insbesondere dann erforderlich sein, wenn die von der Chipkarte 1 und von der externen Einrichtung 2 im Rahmen des Verfahrens zur Prüfung der Echtheit gebildeten Signale physikalisch so unterschiedlich sind, dass eine Übertragung über denselben Kanal nicht möglich ist. Dies kann beispielsweise dann der Fall sein, wenn lediglich die Echtheit der Chipkarte 1 zu überprüfen ist und die Chipkarte 1 im Rahmen der Echtheitsprüfung spezielle elektromagnetische Signale aussendet, die nur mit einer echten Zusatzvorrichtung 4 erzeugt werden können. Dann werden die elektromagnetischen Signale über den Übertragungskanal B₂ übermittelt und über den Übertragungskanal B₁ können Steuersignale von der externen Einrichtung 2 an die Chipkarte 1 übertragen werden, die die Erzeugung der elektromagnetischen Signale beeinflussen.

Fig. 3a zeigt ein Blockschaltbild für ein Ausführungsbeispiel der Erfindung, bei dem die für die Echtheitsprüfung benötigten Daten über die Standard-Datenleitung zwischen der Chipkarte 1 und der externen Einrichtung 2 übertragen werden, d.h. der Übertragungskanal A für die Standarddaten und der Übertragungskanal B für die Echtheitsdaten sind an dieselbe Leitung gebunden, so dass keine physikalische sondern lediglich eine logische Trennung zwischen den beiden Kanälen A und B existiert. Im Gegensatz zu den Fig. 1 und 2 sind in Fig. 3a nicht die Übertragungskanäle A und B selbst dargestellt, sondern die Realisierung der Übertragungskanäle in Form der Standard-Datenleitung. Um eine Unterscheidung von der Darstellung der Übertragungskanäle zu gewährleisten sind die Leitungen bzw. Übertragungsstrecken als einfache Pfeile dargestellt. In Klammern ist jeweils angegeben, welche Übertragungskanäle durch die jeweilige Leitung bzw. Übertragungsstrecke realisiert sind.

Innerhalb der Chipkarte 1 sind der Mikrocontroller 3 und die Zusatzvorrichtung 4 mit der Standard-Datenleitung verbunden. Weiterhin sind der Mikrocontroller 3 und die Zusatzvorrichtung 4 untereinander verbunden. Die logische Trennung der Übertragungskanäle A und B erfolgt dadurch, dass der Mikrocontroller 3 und die Zusatzvorrichtung 4, die wesentliche Teile des Verfahrens zur Echtheitsprüfung ausführt, jeweils die sie betreffenden Signale herausfiltern bzw. die Standard-Datenleitung mit den von ihnen erzeugten Signalen beaufschlagen. Falls dies erforderlich ist, ist über die Verbindungsleitung zwischen dem Mikrocontroller 3 und der Zusatzvorrichtung 4 eine Synchronisation oder ein Datenaustausch möglich.

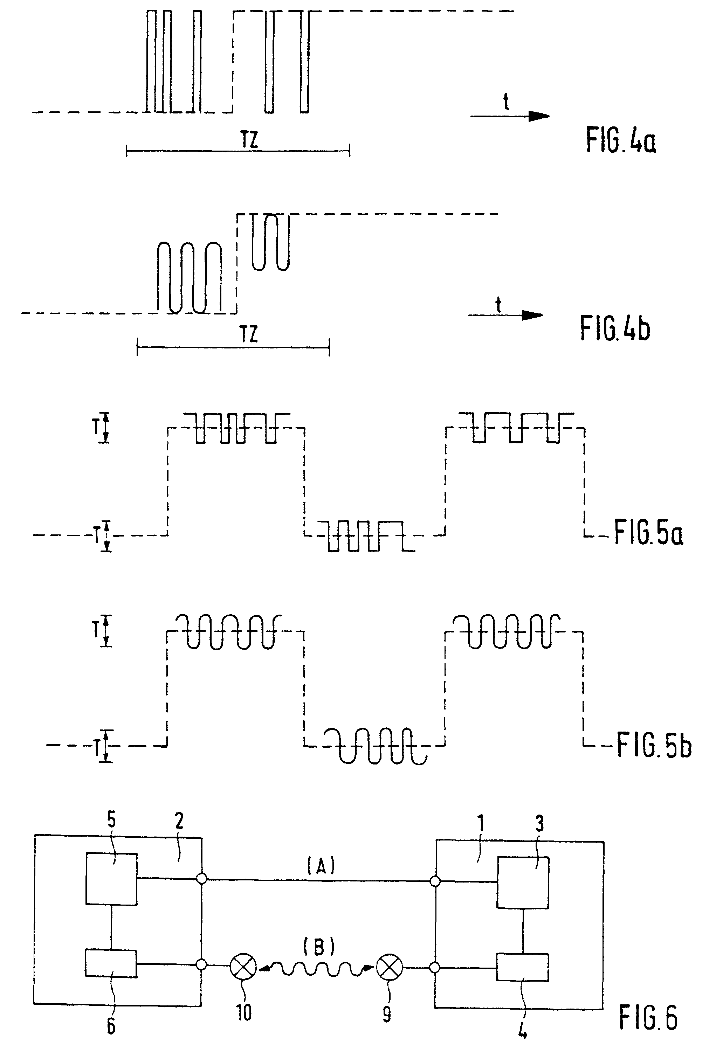

Die externe Einrichtung 2 kann in ähnlicher Weise wie die Chipkarte 1 aufgebaut sein und den Mikrocontroller 5 und die Zusatzvorrichtung 6 enthalten, die jeweils mit der Standard-Datenleitung und untereinander verbunden sind. Mit dem in Fig. 3a dargestellten System können die für die Echtheitsprüfung benötigten Daten in digitaler Form über die Standard-Datenleitung übertragen werden. Ein in diesem Zusammenhang möglicher Signalverlauf ist in Fig. 4a dargestellt und in dem dazugehörigen Text beschrieben.

Fig. 3b zeigt ein Blockschaltbild einer Ausführungsform des erfindungsgemäßen Systems, bei der die für die Prüfung der Echtheit benötigten Daten in Form von digitalen oder analogen Signalen über die Standard-Datenleitung übertragen werden. Entsprechend der Fig. 3a sind auch hier die Übertragungskanäle A und B für die Standarddaten und für die Echtheitsdaten nicht physikalisch sondern lediglich logisch voneinander getrennt. Seitens der Chipkarte 1 wird die logische Trennung der Übertragungskanäle A und B durch einen Mischer-/Entmischer-Baustein 7 vorgenommen, der die von der Standard-Datenleitung kommenden Signale in Standarddaten-Signale und in Echtheitsheitsdaten-Signale auftrennt bzw. die Signale für die Standarddaten und die Signale für die Echtheitsdaten für die Übermittlung über die Standard-Datenleitung zusammenführt. Hierzu ist der Mischer-/Entmischer-Baustein 7 einerseits mit der Standard-Datenleitung verbunden und andererseits mit dem Mikrocontroller 3 und der Zusatzvorrichtung 4. Weiterhin sind der Mikrocontroller 3 und die Zusatzvorrichtung 4 untereinander verbunden. Die externe Einrichtung 2 ist in analoger Weise aufgebaut und besitzt ebenfalls einen Mischer-/Entmischer-Baustein 8, der mit der Standard-Datenleitung sowie mit dem Mikrocontroller 5 und der Zusatzvorrichtung 6 verbunden ist. Auch bei der externen Einrichtung 2 sind der Mikrocontroller 5 und die Zusatzvorrichtung 6 untereinander verbunden. Das in Fig. 3b dargestellte System kann neben den in den Fig. 4b und 5b skizzierten analogen Signalverläufen auch die in Fig. 4a und 5a dargestellten digitalen Signalverläufe verarbeiten.

Fig. 4a zeigt einen Signalverlauf auf der Standard-Datenleitung des in Fig. 3a dargestellten Systems. Abgebildet ist der Signalpegel als Funktion der Zeit t. Die Standard-Datenleitung überträgt sowohl die gestrichelt dargestellten Signale des Übertragungskanals A, d.h. die Standarddaten, als auch die in Form von durchgezogenen Linien dargestellten Signale des Übertragungskanals B, d.h. die Echtheitsdaten. Da die Übertragung der Standarddaten über die Standard-Datenleitung durch die ISO-Norm 7816 festgeiegt ist und die Übertragung der Echtheitsdaten ISO-konform ohne Beeinträchtigung der Standarddaten und mit hoher Geschwindigkeit erfolgen soll, wurden dafür die in der ISO-Norm festgelegten Übergangszonen TZ verwendet, die am Beginn und am Ende eines jeden Datensignals angeordnet sind und innerhalb derer das Signal nicht abgetastet und ausgewertet wird. Der Signalverlauf innerhalb der Übergangszonen hat somit keinen Einfluss auf die Auswertung des Signals gemäß der ISO-Norm 7816 und kann für die Übertragung der Echtheitsdaten verwendet werden. Zu diesem Zweck werden die Echtheitsdaten mittels eines geeigneten Modulationsverfahrens, wie z. B. Amplitudenmodulation, Frequenzmodulation, Puls-Code-Modulation usw. auf das Signal für die Standarddaten aufmoduliert. Für die Abtastung und Auswertung der Echtheitsdaten ist dann natürlich eine zusätzliche Einrichtung erforderlich, da eine Chipkarte, die allein auf die ISO-Norm ausgelegt ist, die in den Übergangszonen enthaltenen Echtheitsdaten überlesen würde. Somit ist bereits für das Lesen der Echtheitsdaten eine bei herkömmlichen Chipkarten nicht vorhandene Zusatzvorrichtung 4 erforderlich, was einen nichtautorisierten Nachbau der erfindungsgemäßen Chipkarte 1 bereits erheblich erschwert. Ebenso ist die Zusatzvorrichtung 4, die in Standardchipkarten nicht vorhanden ist, für das Senden der Echtheitsdaten innerhalb der Übergangszone und letztendlich auch für das Erzeugen der Echtheitsdaten erforderlich. Auch in der externen Einrichtung 2 wird eine entsprechende Zusatzvorrichtung 6 benötigt. Dadurch wird insgesamt ein sehr hoher Sicherheitslevel erreicht.

Fig. 4b zeigt einen zeitlichen Signalverlauf auf der Standard-Datenleitung, der sich von dem in Fig. 4a dargestellten Verlauf insofern unterscheidet, als die Echtheitsdaten als analoge Signale übertragen werden. Im Übrigen erfüllt der Signalverlauf in Fig. 4b die gleichen Kriterien, die auch der Fig. 4a zugrundeliegen, d.h. die Echtheitsdaten werden innerhalb der Übergangszonen TZ der Standarddaten übermittelt und es können die bei Fig. 4a genannten Modulationsverfahren eingesetzt werden. Die Verarbeitung der in Fig. 4b dargestellten Signale erfolgt mit Hilfe des Systems gemäß Fig. 3b. Das in Fig. 3a abgebildete System ist dagegen nicht geeignet, da für die Auftrennung und für das Zusammenführen der Signale für die Echtheitsdaten und der Signale für die Standarddaten die in Fig. 3b abgebildeten Mischer-/ Entmischer-Bausteine 7 und 8 benötigt werden. Die Verwendung von analogen Signalen zur Datenübertragung erschwert den nichtautorisierten Nachbau der Chipkarte 1 bzw. der externen Einrichtung 2 noch weiter, da hierfür ein zusätzliches Know-how für das Integrieren der benötigten Analogtechnik in die Chipkarte 1 benötigt wird. Die für den Bau herkömmlicher Chipkarten benötigten Kenntnisse der Digitaltechnik sind alleine nicht ausreichend.

Fig. 5a zeigt den Signalverlauf auf der Standardleitung für eine Variante der logischen Trennung der Übertragungskanäle A und B. Das Signal für die Standarddaten ist gestrichelt, das Signal für die Echtheitsdaten ist durchgezogen dargestellt. Bei dieser Ausführungsform wird die gemäß der ISO-Norm 7816 zugelassene Toleranz T des Signalpegels der Standarddaten zur Übertragung der Echtheitsdaten ausgenutzt. Hierzu wird dem Signal für die Standarddaten das Echtheitssignal überlagert, wobei der Pegel des Echtheitssignals innerhalb des zulässigen Toleranzbereichs des Signals für Standarddaten liegt. Dabei ist zu gewährleisten, dass die tatsächlich auftretenden Pegelschwankungen des Signals für die Standarddaten zusammen mit dem überlagerten Echtheitssignal nicht zu einer Überschreitung des Toleranzbereichs T führen. Neben dem Signal für die Standarddaten kann als Grundsignal für die Überlagerung jedes beliebige Signal, z. B. das Taktsignal oder das Signal für die Betriebsspannung ausgewählt werden. In allen Fällen kann die Übertragung der Echtheitsdaten über bereits vorhandene Leitungen bzw. Übertragungsstrecken erfolgen, wobei lediglich eine logische Trennung der über dieselbe Leitung bzw. dieselbe Übertragungsstrecke übertragenen Signale stattfindet.

Fig. 5b zeigt den zeitlichen Verlauf von Signalen, die ähnliche Bedingungen erfüllen wie die Signale gemäß Fig. 5a. Der Hauptunterschied zu Fig. 5a besteht darin, dass die Echtheitsdaten mittels analoger Signale übertragen werden, d.h. dass im Gegensatz zu Fig. 5a dem ursprünglich bereits vorhandenem Signal kein digitales Signal, sondern ein analoges Signal überlagert wird, wobei auch hier der Toleranzbereich T berücksichtigt wird. Ebenso wie der Signalverlauf gemäß Fig. 5a wird der Signalverlauf gemäß Fig. 5b mit dem in Fig. 3b dargestellten System verarbeitet bzw. erzeugt. Der Mischer-/ Entmischer 3 bzw. 8 dient dabei wiederum der Überlagerung und der Trennung des analogen oder digitalen Echtheitssignals und des ursprünglich bereits vorhandenen Signals.

Auch bei den Ausführungsbeispielen gemäß Fig. 5a und 5b können die bei Fig. 4a beschriebenen Modulationsverfahren eingesetzt werden.

Fig. 6 zeigt ein Blockschaltbild einer Variante des erfindungsgemäßen Systems, bei dem die Übertragungskanäle A für die Standarddaten und B für die Echtheitsdaten physikalisch voneinander getrennt sind, wobei die Standarddaten über eine Leitung übertragen werden und die Echtheitsdaten kontaktlos mit Hilfe zweier Sende/Empfangseinheiten 9 und 10. Die Sende-/ Empfangseinheiten 9 und 10 sind jeweils mit einer der Zusatzvorrichtungen 4 und 6 verbunden. Die Zusatzvorrichtung 4 der Chipkarte 1 ist weiterhin mit dem Mikrocontroller 3 verbunden, der an die Standard-Datenleitung (Übertragungskanal A) angeschlossen ist. Ebenso ist die Zusatzvorrichtung 6 des externen Geräts mit dem Mikrocontroller 5 verbunden, der wiederum an die Standard-Datenleitung angeschlossen ist. Die kontaktlose Datenübertragung zwischen den Sende-/Empfangseinheiten 9 und 10 kann auf unterschiedliche Art und Weise realisiert werden. So können beispielsweise im Bereich der Chipkartentechnik übliche Übertragungsformen über elektromagnetische Wellen, über magnetische oder elektrische Felder und über Licht im sichtbaren oder unsichtbaren Bereich eingesetzt werden. Wenn ein besonders hoher Sicherheitsstandard erreicht werden soll, wählt man die Übertragungsform so, dass sie mit herkömmlichen Chipkarten nicht durchgeführt werden kann, sondern dass dafür eines spezielle Hardware erforderlich ist. In diesem Zusammenhang kann der Sicherheitsstandard noch weiter verbessert werden, wenn die zusätzlich benötigte Hardware ein sehr hohes Maß an Know-how voraussetzt, einem nichtautorisierten Dritten nicht zugänglich ist und/oder nur mit komplexen und kostspieligen Apparaturen realisierbar ist. So kann beispielsweise für die Übertragung eine strahleninduzierte Lumineszenz oder eine Elektrolumineszenz eines dafür geeigneten Materials herangezogen werden. Dabei bietet es sich auch an, das lumineszierende Material in einem speziellen Muster auf der Chipkarte anzuordnen, um einen Nachbau noch weiter zu erschweren. Es kann auch eine gewisse räumliche Anordnung aus verschiedenen Empfängern und Sendern verwendet werden, so dass ein Nachbau aus diskreten Komponenten äußerst schwierig wird. Ebenso können lumineszierende Materialien verwendet werden, die nur sehr schwer beschaffbar sind und es kann zur Irreführung eines nichtautorisierten Dritten für die Datenübertragung ein Gemisch von Wellenlängen verwendet werden, wobei die Information nur in einer einzigen Wellenlänge enthalten ist oder aus Teilinformationen, die über verschiedene Wellenlängen verstreut sind, zusammengesetzt werden muss, usw.

Eine weitere Variante der Datenübertragung besteht darin, dass die Chipkarte 1 mit einem Hochfrequenzpuls beaufschlagt wird und die Chipkarte 1 daraufhin den Hochfrequenzpuls moduliert und an die externe Einrichtung zurücksendet.

Bei allen Varianten lässt sich ein Nachbau oder eine Manipulation der Chipkarte 1 bzw. der externen Einrichtung 2 auch dadurch erschweren, dass die Zusatzvorrichtung 4 bzw. 6 an den Mikrocontroller 3 bzw. 5 gekoppelt ist und nur dann einwandfrei funktioniert, wenn diese Verbindung tatsächlich besteht. Durch diese Koppelung lässt sich die Nachahmung der Zusatzvorrichtung 4 bzw. 6 mittels diskreter Bauelemente erschweren, wenn der Mikrocontroller 3 bzw. 5 keine einfache externe Ankoppelmöglichkeit bietet.

Die Chipkarte 1 kann als kontaktbehaftete Chipkarte ausgeführt sein, bei der die Standarddaten über eine oder mehrere Kontaktflächen übertragen werden. Ebenso kann die Chipkarte 1 als kontaktlose Chipkarte ausgeführt sein, bei der die Standarddaten kontaktlos übertragen werden.

## Patentansprüche

1. Verfahren zur Echtheitsprüfung eines Datenträgers (1) der einen integrierten Schaltkreis aufweist, durch eine externe Einrichtung (2), mit der der Datenträger (1) Daten austauscht, mit den Schritten:
- Bereitstellen eines ersten Übertragungskanals (A) zur Übertragung von Signalen zwischen dem Datenträger (1) und der externen Einrichtung (2),
- Bereitstellen eines zweiten Übertragungskanals (B), der logisch vom ersten Übertragungskanal (A) getrennt ist, wobei die Trennung des ersten und zweiten Übertragungskanals so ausgebildet ist, dass die Datenübertragung über den einen Übertragungskanal die Datenübertragung über den anderen Übertragungskanal nicht stört und der zweite Übertragungskanal (B) während der gesamten Dauer zwischen Aktivierung und Deaktivierung des Datenträgers (1) aktivierbar ist,
- Erzeugen eines für die Echtheitsprüfung benötigten Signals durch den Datenträger (1),
- Übertragen des Signals für die Echtheitsprüfung vom Datenträger (1) zur externen Einrichtung (2) oder eines für die Erzeugung des Signals für die Echtheitsprüfung benötigten Signals von der externen Einrichtung (2) zum Datenträger (1) wenigstens teilweise über den zweiten Übertragungskanal und
- Empfangen des Signals für die Echtheitsprüfung durch die externe Einrichtung (2) und Entscheiden anhand des empfangenen Signals, ob der Datenträger (1) echt ist.

2. Verfahren nach Anspruch 1, **dadurch gekennzeichnet, dass** der zweite Übertragungskanal (B) durch Modulation des Signals des ersten Übertragungskanals bereitgestellt wird.

3. Verfahren nach Anspruch 2, **dadurch gekennzeichnet, dass** durch die Modulation eine für den ersten Übertragungskanal (A) bestehende ISO-Kompatibilität des Datenaustausches zwischen dem Datenträger (1) und der externen Einrichtung (2) nicht beeinträchtigt wird.

4. Verfahren nach einem der Ansprüche 2 bis 3, **dadurch gekennzeichnet, dass** die Modulation in Bereichen des Signalverlaufes durchgeführt wird, die gemäß der ISO-Norm nicht ausgewertet werden.

5. Verfahren nach einem der Ansprüche 2 bis 3, **dadurch gekennzeichnet, dass** die durch die Modulation verursachten Veränderung am Signal des ersten Übertragungskanals (A) innerhalb des gemäß der ISO-Norm zulässigen Schwankungsbereichs des Signalpegels liegen.

6. Verfahren nach einem der Ansprüche 2 bis 5, **dadurch gekennzeichnet, dass** die Modulation und die Demodulation des Signals im Datenträger (1) und in der externen Einrichtung (2) jeweils mit Hilfe einer Mischer-/Entmischereinrichtung (7, 8) vorgenommen werden.

7. Verfahren nach einem der Ansprüche 1 bis 6 **dadurch gekennzeichnet, dass** es sich beim ersten Übertragungskanal (A) um eine Leitung zur Übertragung der Standarddaten oder um eine Leitung zur Übertragung des Taktsignals oder um eine Leitung für die Versorgungsspannung handelt.

8. Verfahren zur Echtheitsprüfung eines Datenträgers (1) der einen integrierten Schaltkreis (3) aufweist, durch eine externe Einrichtung (2), mit der der Datenträger (1) Daten austauscht, mit den Schritten:
- Bereitstellen eines ersten Übertragungskanals (A) zur Übertragung von Signalen zwischen dem Datenträger (1) und der externen Einrichtung (2),
- Bereitstellen eines zweiten Übertragungskanals (B), der physikalisch vom ersten Übertragungskanal (A) getrennt ist, und aus wenigstens einer Leitung oder einer kontaktlosen Übertragungsstrecke besteht, die gemäß der ISO-Norm nicht vorgesehen ist, wobei der zweite Übertragungskanal (B) während der gesamten Dauer zwischen Aktivierung und Deaktivierung des Datenträgers (1) aktivierbar ist,
- Erzeugen eines für die Echtheitsprüfung benötigten Signals durch den Datenträger (1),
- Übertragung des Signals für die Echtheitsprüfung vom Datenträger (1) zur externen Einrichtung (2) oder eines für die Erzeugung dieses Signals benötigten Signals von der externen Einrichtung (2) zum Datenträger (1) wenigstens teilweise über den zweiten Übertragungskanal (B) und
- Empfangen des Signals für die Echtheitsprüfung durch die externe Einrichtung (2) und Entscheiden anhand des empfangenen Signals, ob der Datenträger (1) echt ist.

9. Verfahren nach Anspruch 8, **dadurch gekennzeichnet, dass** die kontaktlose Übertragungsstrecke durch Übertragung der Daten als elektromagnetische, als elektrostatische, als magnetische, als akustische oder als optische Signale realisiert wird.

10. Verfahren nach Anspruch 9, **dadurch gekennzeichnet, dass** für die Übertragung über die kontaktlose Übertragungsstrecke ein Gemisch von Wellenlängen eingesetzt wird.

11. Verfahren nach einem der Ansprüche 1 bis 10, **dadurch gekennzeichnet, dass** die Entscheidung bezüglich der Echtheit des Datenträgers (1) davon abhängig ist, ob ein Datenaustausch zwischen den Einrichtungen (3, 4) möglich ist, an die im Datenträger (1) der erste und der zweite Übertragungskanal angekoppelt sind.

12. Datenträger (1), der mit einer externen Einrichtung (2) Daten austauschen kann und einen integrierten Schaltkreis aufweist, wobei
- der Datenträger (1) über eine erste Einrichtung (3) zur Erzeugung von Signalen für den Datenaustausch zwischen dem Datenträger (1) und der externen Einrichtung (2) verfügt, und die erste Einrichtung (3) an einen ersten Übertragungskanal (A) ankoppelbar ist,
- der Datenträger (1) über eine zweite Einrichtung (4) für die Erzeugung von Signalen, die für eine Echtheitsprüfung des Datenträgers (1) benötigt werden, verfügt, und die zweite Einrichtung (4) an einen zweiten Übertragungskanal (B) ankoppelbar ist und mit der ersten Einrichtung (3) verbunden ist,
- der erste und der zweite Übertragungskanal logisch oder physikalisch voneinander getrennt sind und
- der Datenaustausch mit der zweiten Einrichtung (4) den Datenaustausch mit der ersten Einrichtung (3) nicht stört und die zweite Einrichtung (4) während der gesamten Dauer zwischen Aktivierung und Deaktivierung des Datenträgers (1) für die Erzeugung von Signalen für die Echtheitsprüfung des Datenträgers bereitsteht.

13. Datenträger nach Anspruch 12, **dadurch gekennzeichnet, dass** die erste Einrichtung (3) und die zweite Einrichtung (4) jeweils über einen Mischer/Entmischer-Baustein (7) an die Übertragungskanäle (A, B) gekoppelt sind.

14. System zur Echtheitsprüfung eines Datenträgers (1), und/oder einer externen Einrichtung (2) bestehend aus:
- einem Datenträger (1) mit einer ersten Einrichtung (3) zur Erzeugung von Signalen für den Datenaustausch mit der externen Einrichtung (2) und einer zweiten Einrichtung (4) zur Erzeugung und/oder Verarbeitung von Signalen für die Echtheitsprüfung,
- einer externen Einrichtung (2) mit einer ersten Einrichtung (5) zur Erzeugung von Signalen für den Datenaustausch mit dem Datenträger (1) und einer zweiten Einrichtung (6) zur Erzeugung und/oder Verarbeitung von Signalen für die Echtheitsprüfung,
- einem ersten Übertragungskanal (A) zur Übertragung von Signalen zwischen der ersten Einrichtung (3) des Datenträgers (1) und der ersten Einrichtung (5) der externen Einrichtung (2)
- und einem zweiten Übertragungskanal (B) zur Übertragung von Signalen zwischen der zweiten Einrichtung (4) des Datenträgers (1) und der zweiten Einrichtung (6) der externen Einrichtung (2), wobei der erste und der zweite Übertragungskanal (A, B) voneinander logisch oder physikalisch getrennt sind und die Trennung des ersten und zweiten Übertragunskanals (A, B) so ausgebildet ist, dass die Datenübertragung über den einen Übertragungskanal die Datenübertragung über den anderen Übertragungskanal nicht stört und wobei der zweite Übertragungskanal (B) während der gesamten Dauer zwischen Aktivierung und Deaktivierung des Datenträgers (1) aktivierbar ist.

## Claims

1. A method for testing the authenticity of a data carrier (1) having an integrated circuit by an external device (2) with which the data carrier (1) exchanges data, comprising the steps of:
- providing a first transmission channel (*A*) for transmitting signals between the data carrier (1) and the external device (2),
- providing a second transmission channel (*B*) logically separated from the first transmission channel (*A*), the separation of the first and second transmission channels being so designed that data transmission via one transmission channel does not interfere with data transmission via the other transmission channel and the second transmission channel (*B*) is activable during the total time period between activation and deactivation of the data carrier (1),
- having the data carrier (1) generate a signal required for authenticity testing,
- transmitting the signal for authenticity testing from the data carrier (1) to the external device (2) or a signal required for generating the signal for authenticity testing from the external device (2) to the data carrier (1) at least partly via the second transmission channel, and
- having the external device (2) receive the signals for authenticity testing, and deciding on the basis of the received signal whether the data carrier (1) is authentic.

2. A method according to claim 1, **characterized in that** the second transmission channel (*B*) is provided by modulating the signal of the first transmission channel.

3. A method according to claim 2, **characterized in that** modulation does not impair an ISO compatibility of data exchange between the data carrier (1) and the external device (2) existing for the first transmission channel (*A*).

4. A method according to either of claims 2 to 3, **characterized in that** modulation is performed in areas of the signal pattern which are not evaluated according to the ISO standard.

5. A method according to either of claims 2 to 3, **characterized in that** the changes caused by modulation in the signal of the first transmission channel (*A*) are within the range of variation of the signal level permitted by the ISO standard.

6. A method according to any of claims 2 to 5, **characterized in that** modulation and demodulation of the signal are performed in the data carrier (1) and in the external device (2) with the aid of a mixing/demixing device (7, 8) in each case.

7. A method according to any of claims 1 to 6, **characterized in that** the first transmission channel (*A*) is a line for transmitting standard data or a line for transmitting the clock signal or a line for the supply voltage.

8. A method for testing the authenticity of a data carrier (1) having an integrated circuit (3) by an external device (2) with which the data carrier (1) exchanges data, comprising the steps of:
- providing a first transmission channel (*A*) for transmitting signals between the data carrier (1) and the external device (2),
- providing a second transmission channel (*B*) physically separated from the first transmission channel (*A*) and comprising at least one line or contactless transmission path not provided according to the ISO standard, the second transmission channel (*B*) being activable during the total time period between activation and deactivation of the data carrier (1),
- having the data carrier (1) generate a signal required for authenticity testing,
- transmitting the signal for authenticity testing from the data carrier (1) to the external device (2) or a signal required for generating said signal from the external device (2) to the data carrier (1) at least partly via the second transmission channel (*B*), and
- having the external device (2) receive the signal for authenticity testing, and deciding on the basis of the received signal whether the data carrier (1) is authentic.

9. A method according to claim 8, **characterized in that** the contactless transmission path is realized by transmitting the data as electromagnetic, electrostatic, magnetic, acoustic or optical signals.

10. A method according to claim 9, **characterized in that** a mixture of wavelengths is used for transmission via the contactless transmission path.

11. A method according to any of claims 1 to 10, **characterized in that** the decision on authenticity of the data carrier (1) is contingent on whether data exchange is possible between the devices (3, 4) to which the first and second transmission channels are coupled in the data carrier (1).

12. A data carrier (1) which can exchange data with an external device (2) and has an integrated circuit, wherein
- the data carrier (1) has a first device (3) for generating signals for data exchange between the data carrier (1) and the external device (2), and the first device (3) is adapted to be coupled to a first transmission channel (*A*),
- the data carrier (1) has a second device (4) for generating signals required for authenticity testing of the data carrier (1), and the second device (4) is adapted to be coupled to a second transmission channel (*B*) and connected with the first device (3),
- the first and second transmission channels are separated logically or physically, and
- data exchange with the second device (4) does not interfere with data exchange with the first device (3), and the second device (4) is ready for generating signals for authenticity testing of the data carrier during the total time period between activation and deactivation of the data carrier (1).

13. A data carrier according to claim 12, **characterized in that** the first device (3) and the second device (4) are each coupled to the transmission channels (*A, B*) via a mixing/demixing module (7).

14. A system for testing the authenticity of a data carrier (1) and/or an external device (2) comprising:
- a data carrier (1) with a first device (3) for generating signals for data exchange with the external device (2) and a second device (4) for generating and/or processing signals for authenticity testing,
- an external device (2) with a first device (5) for generating signals for data exchange with the data carrier (1) and a second device (6) for generating and/or processing signals for authenticity testing,
- a first transmission channel (*A*) for transmitting signals between the first device (3) of the data carrier (1) and the first device (5) of the external device (2),
- and a second transmission channel (*B*) for transmitting signals between the second device (4) of the data carrier (1) and the second device (6) of the external device (2), the first and second transmission channels (*A*, *B*) being separated logically or physically and the separation of the first and second transmission channels (*A*, *B*) being so designed that data transmission via one transmission channel does not interfere with data transmission via the other transmission channel, and the second transmission channel (*B*) being activable during the total time period between activation and deactivation of the data carrier (1).

## Revendications

1. Procédé pour contrôler l'authenticité d'un support de données (1) présentant un circuit intégré par un dispositif (2) externe, avec lequel le support de données (1) échange des données, comportant les étapes suivantes :
- mise à disposition d'un premier canal de transmission (A) pour la transmission de signaux entre le support de données (1) et le dispositif (2) externe ;
- mise à disposition d'un deuxième canal de transmission (B), qui est séparé logiquement du premier canal de transmission (A), la séparation des premier et deuxième canaux de transmission étant réalisée de telle sorte que la transmission des données par un canal de transmission ne perturbe pas la transmission des données par l'autre canal de transmission et que le deuxième canal de transmission (B) est activable pendant toute la durée entre l'activation et la désactivation du support de données(1);
- génération d'un signal nécessaire pour le contrôle d'authenticité par le support de données (1) ;
- transmission du signal pour le contrôle d'authenticité du support de données (1) au dispositif (2) externe ou d'un signal nécessaire pour la génération du signal pour le contrôle d'authenticité du dispositif externe (2) au support de données (1) au moins partiellement par le deuxième canal de transmission ; et
- réception du signal pour le contrôle d'authenticité par le dispositif externe (2) et décision à l'aide du signal reçu que le support de données (1) est authentique ou non.

2. Procédé selon la revendication 1, **caractérisé en ce que** le deuxième canal de transmission (B) est mis à disposition par la modulation du signal du premier canal de transmission.

3. Procédé selon la revendication 2, **caractérisé en ce que** la modulation ne porte pas préjudice à une compatibilité ISO, existante pour le premier canal de transmission (A), de l'échange de données entre le support de données (1) et le dispositif (2) externe.

4. Procédé selon l'une quelconque des revendications 2 à 3, **caractérisé en ce que** la modulation est effectuée dans des zones de la courbe du signal qui ne sont pas analysées selon la norme ISO.

5. Procédé selon l'une quelconque des revendications 2 à 3, **caractérisé en ce que** les modifications entraînées par la modulation sur le signal du premier canal de transmission (A) se situent dans les limites de la plage de variation, autorisée selon la norme ISO, du niveau de signal.

6. Procédé selon l'une quelconque des revendications 2 à 5, **caractérisé en ce que** la modulation et la démodulation du signal dans le support de données (1) et dans le dispositif (2) externe sont effectuées à chaque fois à l'aide d'un dispositif mélangeur/séparateur (7, 8).

7. Procédé selon l'une quelconque des revendications 1 à 6, **caractérisé en ce que**, pour le premier canal de transmission (A), il s'agit d'une ligne pour la transmission des données standard ou d'une ligne pour la transmission du signal d'horloge ou d'une ligne pour la tension d'alimentation.

8. Procédé pour le contrôle d'authenticité d'un support de données (1) présentant un circuit (3) intégré par un dispositif (2) externe, avec lequel le support de données (1) échange des données, comportant les étapes suivantes :
- mise à disposition d'un premier canal de transmission (A) pour la transmission de signaux entre le support de données (1) et le dispositif (2) externe ;
- mise à disposition d'un deuxième canal de transmission (B), qui est séparé physiquement du premier canal de transmission (A), et comprend au moins une ligne ou une section de transmission sans contact, qui n'est pas prévue selon la norme ISO, le deuxième canal de transmission (B) étant activable pendant toute la durée entre l'activation et la désactivation du support de données (1) ;
- génération d'un signal utilisé pour le contrôle d'authenticité par le support de données (1);
- transmission du signal pour le contrôle d'authenticité du support de données (1) au dispositif (2) externe ou d'un signal nécessaire pour la génération de ce signal du dispositif (2) externe au support de données (1) au moins partiellement par le deuxième canal de transmission (B) ; et
- réception du signal pour le contrôle d'authenticité par le dispositif (2) externe et décision à l'aide du signal reçu que le support de données (1) est authentique ou non.

9. Procédé selon la revendication 8, **caractérisé en ce que** la section de transmission sans contact est réalisée par transmission des données sous la forme de signaux électromagnétiques, électrostatiques, magnétiques, acoustiques ou optiques.

10. Procédé selon la revendication 9, **caractérisé en ce qu'**un mélange de longueurs d'ondes est utilisé pour la transmission par la section de transmission sans contact.

11. Procédé selon l'une quelconque des revendications 1 à 10, **caractérisé en ce que** la décision concernant l'authenticité du support de données (1) dépend du fait qu'un échange de données entre les dispositifs (3, 4) auxquels sont couplés les premier et deuxième canaux de transmission dans le support de données (1), est possible.

12. Support de données (1), qui peut échanger des données avec un dispositif (2) externe et présente un circuit intégré ;
- le support de données (1) disposant d'un premier dispositif (3) pour la génération de signaux destinés à l'échange de données entre le support de données (1) et le dispositif (2) externe, et le premier dispositif (3) pouvant être couplé à un premier canal de transmission (A) ;
- le support de données (1) disposant d'un deuxième dispositif (4) pour la génération de signaux, nécessaires pour un contrôle d'authenticité du support de données (1), et le deuxième dispositif (4) pouvant être couplé à un deuxième canal de transmission (B) et étant relié au premier dispositif (3);
- les premier et deuxième canaux de transmission sont séparés logiquement ou physiquement l'un de l'autre ; et
- l'échange de données avec le deuxième dispositif (4) ne perturbe pas l'échange de données avec le premier dispositif (3) et le deuxième dispositif (5) est mis à disposition pendant toute la durée entre l'activation et la désactivation du support de données (1) pour la génération de signaux pour le contrôle d'authenticité du support de données.

13. Support de données selon la revendication 12, **caractérisé en ce que** le premier dispositif (3) et le deuxième dispositif (4) sont couplés chacun au moyen d'un composant mélangeur/séparateur (7) aux canaux de transmission (A, B).

14. Système pour le contrôle d'authenticité d'un support de données (1) et/ou d'un dispositif (2) externe comprenant les éléments suivants :
- un support de données (1) avec un premier dispositif (3) pour la génération de signaux pour l'échange de données avec le dispositif (2) externe et un deuxième dispositif (4) pour la génération et/ou le traitement de signaux pour le contrôle d'authenticité ;
- un dispositif (2) externe avec un premier dispositif (5) pour la génération de signaux pour l'échange de données avec le support de données (1) et un deuxième dispositif (6) pour la génération et/ou le traitement de signaux pour le contrôle d'authenticité ;
- un premier canal de transmission (A) pour la transmission de signaux entre le premier dispositif (3) du support de données (1) et le premier dispositif (5) du dispositif (2) externe;
- un deuxième canal de transmission (B) pour la transmission de signaux entre le deuxième dispositif (4) du support de données (1) et le deuxième dispositif (6) du dispositif (2) externe, les premier et deuxième canaux de transmission (A, B) étant séparés l'un de l'autre logiquement ou physiquement, et la séparation des premier et deuxième canaux de transmission (A, B) étant réalisée de telle sorte que la transmission des données par un canal de transmission ne perturbe pas la transmission des données par l'autre canal de transmission, et le deuxième canal de transmission (B) étant activable pendant toute la durée entre l'activation et la désactivation du support de données (1).
